# EUROPEAN PATENT APPLICATION

(11) **EP 4 260 768 A1**
(43) Date of publication of application: **18.10.2023**
(21) Application number: 23156967.4
(22) Date of filing: 16.02.2023
(51) Int. Cl.: A47J 31/06

(54) **COFFEE POWDER FILTER CUP USED FOR A COFFEE MACHINE AND MANUFACTURING PROCESS THEREOF**

(30) Priority: 15.04.2022 TW 111114433; 29.11.2022 TW 111145682
(71) Applicant: I Cherng Refrigeration Industrial Co., Ltd., 83164 Kaohsiung City (TW)
(72) Inventor: Hsueh, Po-Yang, 83164 Kaohsiung City (TW)
(74) Representative: Cohausz & Florack

(57) **Abstract**

A coffee powder filter cup for a coffee machine includes a bottom wall (2) and a peripheral wall (3). The bottom wall (2) has a thickness ranging from 0.7 mm to 1.5 mm and a plurality of apertures (200) formed by a processing laser (L). Each of the apertures (200) has an extending portion (201) that has a length (0) ranging from 0.2 mm to 2.0 mm in an extending direction (E), and two end portions (202) that are connected respectively to opposite ends of the extending portion (201) in the extending direction (E). The extending portion (201) has a width (X) ranging from 0.05 mm to 0.4 mm in a direction that is perpendicular to the extending direction (E). The peripheral wall (3) extends from a periphery of the bottom wall (2) in an upward direction to cooperate with the bottom wall (2) to define a brewing space (W).

## Description

The present invention relates to a coffee machine component and its manufacture, more particularly to a coffee powder filter cup and a manufacturing process thereof.

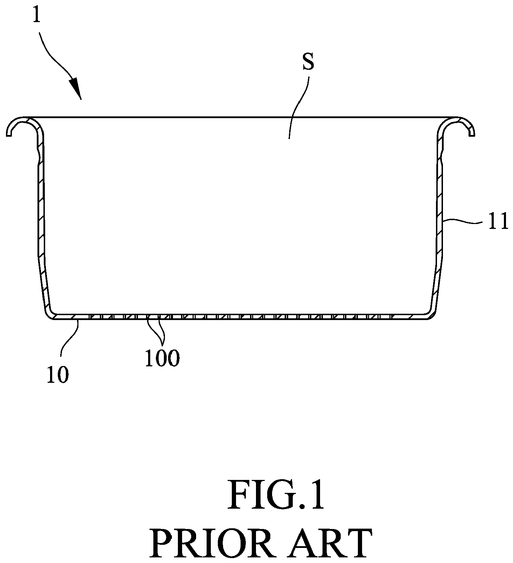

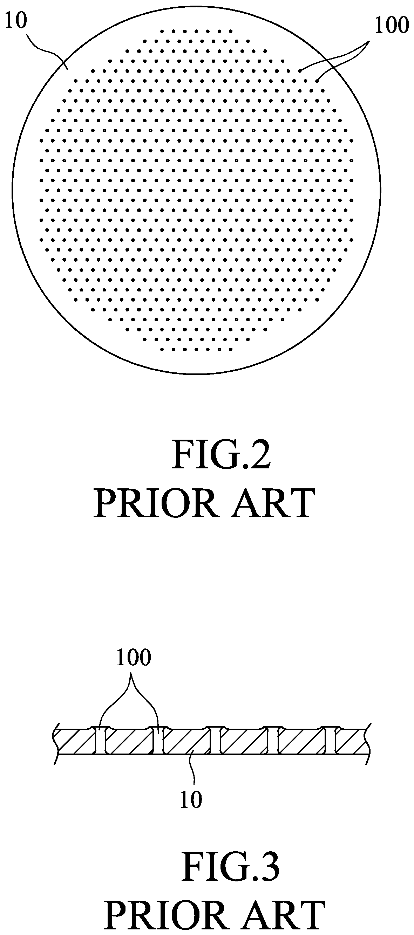

Referring to Figures 1 and 2, a conventional coffee powder filter cup 1 includes a bottom plate 10 formed with a plurality of drip holes 100, and a peripheral wall 11 extending upwardly from a periphery of the bottom plate 10 and cooperating with the bottom plate 10 to define a brewing space (S). When using a coffee machine (not shown) to brew coffee under high pressure, the coffee powder is first placed in the brewing space (S), and then the coffee powder filter cup 1 is fitted into the coffee machine. Subsequently, water is introduced from related components of the coffee machine into the brewing space (S) for brewing. After the water thoroughly soaks the coffee powder and completes the extraction, the coffee liquid flows out through the drip holes 100.

The diameter, distribution, number of holes, density, and the like of the drip holes 100 can be adjusted to correspond to the different brewing parameters. The conventional coffee powder filter cup 1 is directly formed out of a single piece of steel sheet by a punch die unit. The punch die unit includes a plurality of punch dies, each of the punch dies is disposed for punching a drip hole 100. Due to the physical characteristics and constraints of the punch dies, if the steel sheet has a thickness that is too great, the punch dies may not be able to effectively penetrate the steel sheet to form the drip holes 100. In other words, when using small punch dies to punch drip holes 100 having a small diameter, a relatively thin steel sheet needs to be used in order to make the conventional coffee powder filter cup 1. However, such conventional coffee powder filter cup 1 may not be able to bear the high pressure of hot water during coffee-brewing. Therefore, the minimum diameter of the drip holes 100 of the conventional coffee powder filter cup 1 can only be as small as about 0.3 mm. In addition, the number of the drip holes 100 in the bottom plate 10 is limited due to arrangement of the punch dies. Only 2 to 3 % of the area of the bottom plate 10 at the most can be used for punching the drip holes 100. Due to the restriction on relevance between the diameters of the drip holes 100 and water flow resistance while the water is flowing therethrough, some brewing characteristics cannot be achieved.

In addition, since the punch dies punch the solid steel sheet in one direction to form the drip holes 100 and are withdrawn from the steel sheet in an opposite direction, the regions around the drip holes 100 exhibit unidirectional depressions as seen in Figure 3 so that each drip hole 100 has an outer diameter that is at opposite open ends thereof, and an inner diameter that is between the opposite open ends thereof and that is different from the outer diameter. To ensure the quality of the punched products, after punching, a further deburring step is required to conduct deburring on one side of each base plate 10 to remove the metal burrs. As a result, not only is the manufacturing process cumbersome, but it is also impossible to make the walls defining the drip holes 100 complete straight. From the aspect of coffee brewing, if the inner and outer diameters of each drip hole 100 are significantly different, the coffee powder is likely to clog the drip holes 100 and unintentionally increase the flow resistance of water flowing therethrough. In addition, during brewing, the brewing time will be increased to cause over-extraction that directly and adversely affects the coffee flavor.

An object of the disclosure is to provide a coffee powder filter cup used for a coffee machine that can ensure the forming quality with relatively a simple process, thereby reducing the possibility of unintentional over-extraction during brewing.

According to the disclosure, the coffee powder filter cup is provided as set out in each of the appended claims.

Another object of the disclosure is to provide a process for manufacturing the abovementioned coffee powder filter cup.

According to the disclosure, the process for manufacturing the coffee cup powder filter cup for a coffee machine is provided as set out in each of the appended claims.

Other features and advantages of the disclosure will become apparent in the following detailed description of the embodiment(s) with reference to the accompanying drawings. It is noted that various features may not be drawn to scale.
Figure 1 is a cross-sectional view of a conventional coffee powder filter cup.
Figure 2 is a top view illustrating a bottom plate with a plurality of apertures of the conventional coffee powder filter cup.
Figure 3 is a fragmentary enlarged cross-sectional view illustrating the configuration of each of the apertures.
Figure 4 is a perspective view of a first embodiment of a coffee powder filter cup according to the disclosure.
Figure 5 is a fragmentary enlarged view of a bottom wall of the first embodiment, illustrating an aperture.
Figure 6 is a schematic view illustrating a plurality of the apertures that strain coffee ground particles.
Figure 7 is a top view of the bottom wall of the first embodiment, illustrating distribution of the apertures.
Figure 8 is a fragmentary enlarged top view of the bottom wall of a second embodiment of the coffee powder filter cup according to the disclosure.
Figure 9 is a top view of the bottom wall of a third embodiment of the coffee powder filter cup according to the disclosure.
Figure 10 is a fragmentary enlarged top view of the bottom wall of the third embodiment, illustrating a plurality of the apertures.
Figure 11 is a block flow diagram of an embodiment of a process for manufacturing the coffee powder filter cup according to the disclosure.
Figure 12 is an illustrative diagram illustrating the steps of the embodiment of the process illustrated in Figure 11.
Figure 13 is a fragmentary enlarged top view of the bottom wall of the coffee powder filter cup, illustrating a laser processing step of the embodiment of the process for forming an aperture.
Figure 14 is a fragmentary cross-sectional view of the bottom wall.
Figure 15 is an illustrative diagram illustrating the use condition of the coffee powder filter cup according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

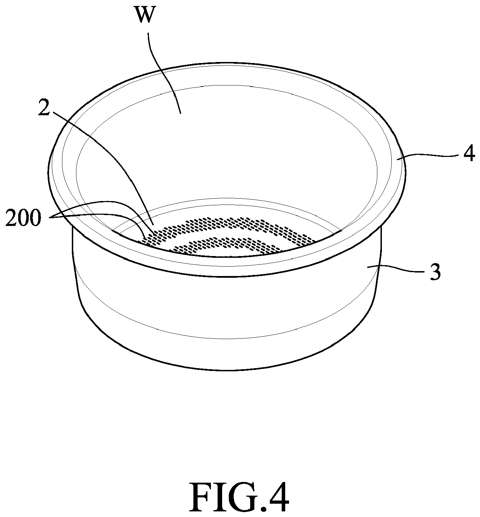

As shown in Figure 4, a first embodiment of a coffee powder filter cup used for a coffee machine according to the present disclosure includes a porous bottom wall 2 having a thickness ranging from 0.7 mm to 1.5 mm, a peripheral wall 3 extending from a periphery of the bottom wall 2 in an upward direction to cooperate with the bottom wall 2 to define a brewing space (W), and an annular positioning ring 4 extending radially and outwardly from a top end of the peripheral wall 3. In this embodiment, the bottom wall 2 has a thickness of 0.75 mm.

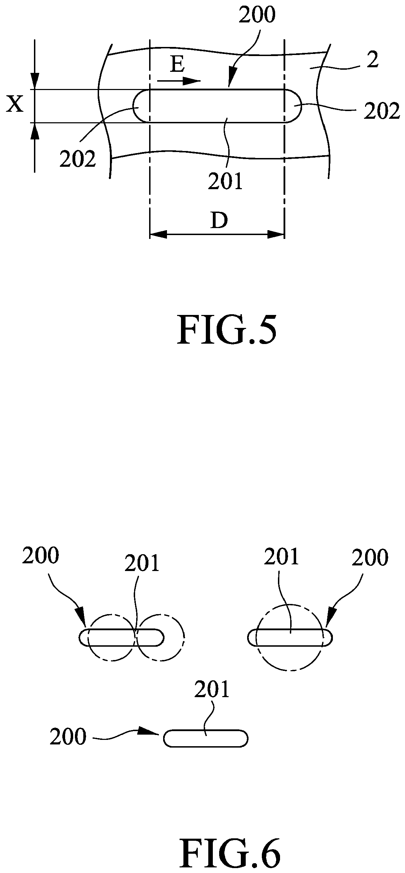

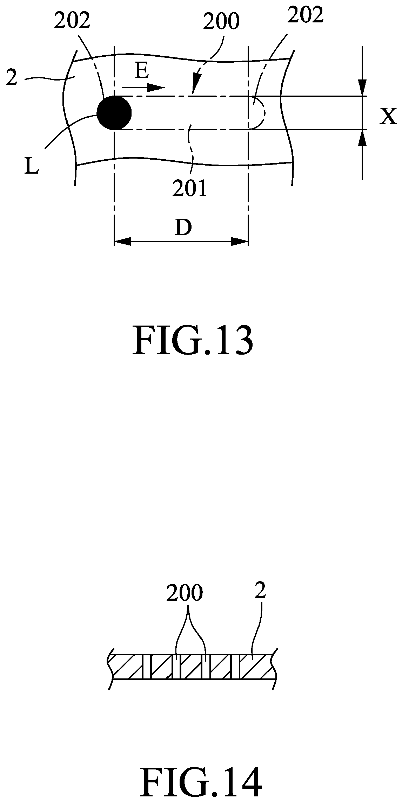

The bottom wall 2 is round-shaped, and has a plurality of apertures 200 formed by a processing laser (L) (see Figure 13). As shown in Figure 5, each of the apertures 200 has an extending portion 201 that has a length (D) in an extending direction (E), and two end portions 202 that are connected respectively to opposite ends of the extending portion 201 in the extending direction (E). The length (D) ranges from 0.2 mm to 2.0 mm. The extending portion 201 has a width (X) ranging from 0.05 mm to 0.4 mm in a direction that is perpendicular to the extending direction (E).

If each of the apertures 200 is a round hole, it will easily be blocked by a coffee ground particle that has a diameter greater than that of the aperture 200. As shown in Figures 5 and 6, each of the apertures 200 is elongated in the extending direction (E), and the length (D) is greater than the diameter of the largest ones of the coffee ground particles, so that the aperture 200 will not be entirely blocked by the coffee ground particle. Additionally, the width (X) may be designed to be smaller than the diameter of the smallest ones of the coffee ground particles in order to prevent the coffee ground particles from falling out of the bottom wall 2 through the apertures 200.

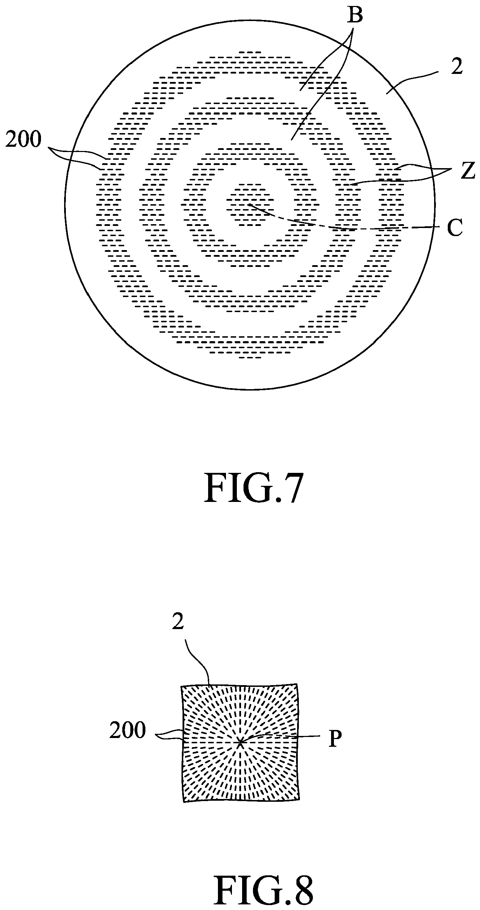

Referring to Figures 4 and 7, the bottom wall 2 has a plurality of filtration areas (Z) concentrically and radially spaced apart from each other, a plurality of buffer areas (B) arranged alternately with the filtration areas (Z), and a central region (C) having a round shape and disposed at a center of the bottom wall 2. The apertures 200 are formed only in the filtration areas (Z) and the central region (C). Different flow resistances can be provided through the arrangement of the filtration areas (Z) and the central region (C). The presence of the non-porous buffer areas (B) will urge the water in the brewing space (W) to flow further toward the periphery of the bottom wall 2 before the water trickles down through the apertures 200, and a small water flow will be generated in the bottom end portion of the brewing space (W). In addition to optimizing the extraction by stirring the coffee powder during brewing, the small water flow can also reduce the possibility of the coffee powder particles falling through the apertures 200.

Referring to Figure 8, a second embodiment of the coffee powder filter cup according to the disclosure is illustrated. The second embodiment has a structure similar to that of the first embodiment, except for the arrangement of the apertures 200. Referring further to Figure 5, in this embodiment, the extending portion 201 of each of the apertures 200 extends in the extending direction (E) that extends radially and outwardly from a center (P) of the bottom wall 2. The apertures 200 are arranged radially with respect to the center point (P) of the bottom wall 2. Since the apertures 200 extend in the same directions as the water flows in the brewing space (W), the water may flow through the apertures 200 smoothly with less flow resistance.

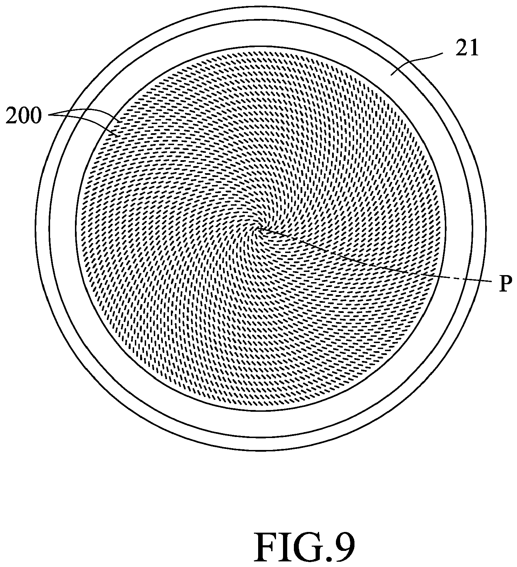

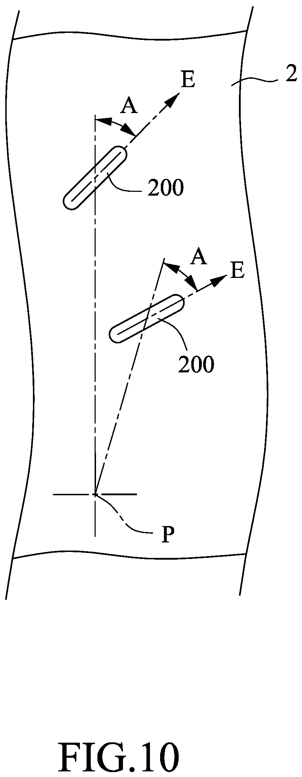

Referring to Figures 9 and 10, a third embodiment of the coffee powder filter cup according to the disclosure is illustrated. The third embodiment has a structure similar to that of the first embodiment, except for the arrangement of the apertures 200. In this embodiment, the apertures 200 are divided into a plurality of groups. For each of the groups, the apertures (200) in the group are arranged in a circular region surrounding the center point (P) of the bottom wall 2. The groups are concentrically and radially spaced apart from each other with respect to the center point (P). An angle (A) is defined between the extending direction (E) in which the extending portion 201 of each of the apertures 200 extends and an imaginary line between the center point (P) of the bottom wall 2 and a center of the aperture 200. For each of the groups of the apertures 200, the angles (A) corresponding to the apertures 200 in the group are identical. The angles (A) of the groups of the apertures 200 increase radially and outwardly. The arrangement of the apertures 200 provides another option for the hot water to flow through the apertures 200 so as to offer a different taste of the coffee.

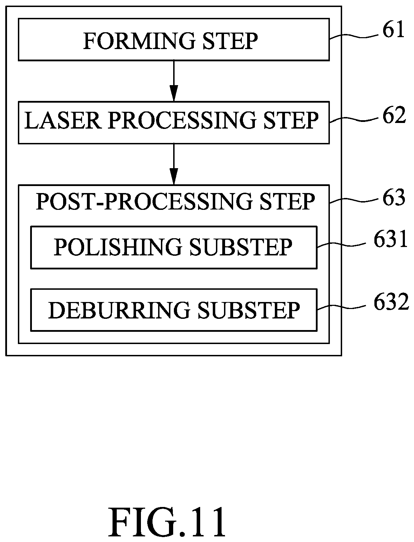

Figure 11 illustrates, by a block flow diagram, an embodiment of a process for manufacturing the coffee powder filter cup of the present disclosure. The embodiment of the process includes a forming step 61, a laser processing step 62, and a post-processing step 63.

In the forming step 61, a lathe is used to machine a single piece of metal raw material to form a semi-finished product 60. Because the structure of the piece of metal raw material is not bent or otherwise deformed during the formation of the semi-finished product 60, the overall structural strength will be increased significantly. Moreover, the semi-finished product 60 being formed using a lathe may have different thicknesses in different parts thereof so as to bear the high pressure of the hot water during the coffee-brewing process. The semi-finished product 60 has a round-shaped non-porous bottom wall 2', a peripheral wall 3 extending from a periphery of the non-porous bottom wall 2' in an upward direction to cooperate with the non-porous bottom wall 2' to define a brewing space (W), and an annular positioning ring 4 extending radially and outwardly from a top end of the peripheral wall 3. The non-porous bottom wall 2' has a thickness ranging from 0.7 mm to 0.15 mm so as to bear the high pressure of the hot water during the coffee-brewing process. In this embodiment, the thickness of the non-porous bottom wall 2' is 0.75 mm.

Referring to Figures 11 to 14, in the laser processing step 62, a plurality of apertures 200 are formed through the non-porous bottom wall 2' using a processing laser (L). Each of the apertures 200 is formed by using the processing laser (L) to penetrate the non-porous bottom wall 2' and moving the processing laser (L) in an extending direction (E) for a predetermined distance. The extending portion 201 of each of the apertures 200 has the length (D) ranging from 0.2 mm to 2.0 mm in the extending direction (E), and the width (X) ranging from 0.05 mm to 0.4 mm in a direction that is perpendicular to the extending direction (E). The processing laser (L) is a fiber laser in the embodiment so as to effectively penetrate the non-porous bottom wall 2'. Compared with the process using a punch die, the laser processing step 62 can melt a relatively thick non-porous bottom wall 2' with a higher operating power to form the apertures 200, which has a substantially uniform diameter, as shown in Figure 14. Furthermore, the depressions on the bottom plate of the conventional coffee powder filter cup can be avoided by the utilization of processing laser (L). Therefore, the apertures 200 can be formed in a denser format. Increasing the number of apertures per unit area can expand the range of brewing parameters for a particular specification.

In the laser processing step 62, the processing laser (L) is applied to specific locations of the bottom plate 2 to form the apertures 200. For example, as shown in Figure 7, the processing laser (L) is applied to the central region (C) and the filtration areas (Z) of the bottom plate 2. Implementing the filtration areas (Z) and the central region (C) is only for a particular specification. The processing laser (L) may be adjusted to form apertures 200 with different arrangements according to needs of varying brewing parameters.

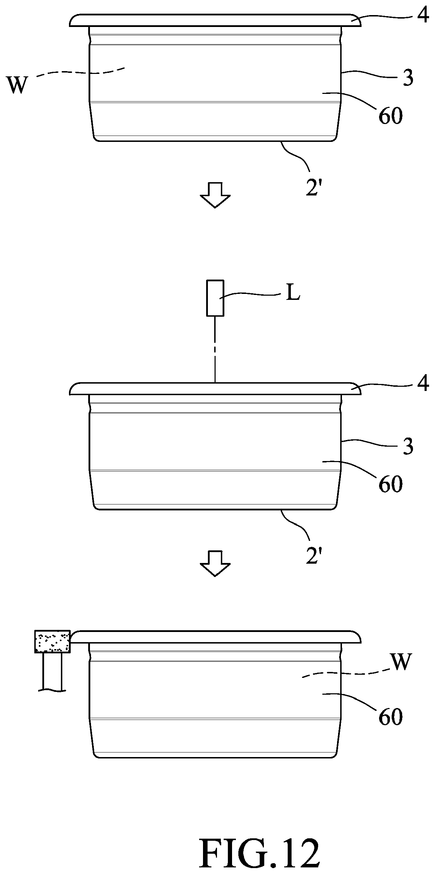

Referring back to Figures 11 and 12, the post-processing step 63 includes a polishing substep 631 of polishing the semi-finished product 60 and a deburring substep 632 of removing burrs of the semi-finished product 60. The purpose of post-processing step 63 includes improving the appearance of the product and getting rid of burrs that were unavoidably generated during the lathe processing and would hinder the use of the product. After completing post-processing step 63, the finished product, as shown in Figure 14, can be created with good overall structural strength and substantially cylindrical apertures 200, offering a product with brewing parameters corresponding to a particular specification.

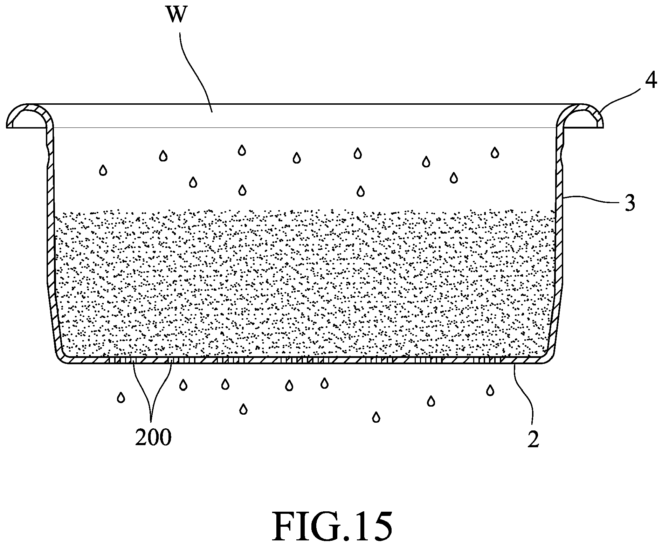

Referring to Figures 13 and 15, coffee powder is placed in the brewing space (W) when using the disclosed coffee powder filter cup to brew coffee in a coffee machine. Then, brewing is performed using a high pressure water flow. The user may choose a coffee powder filter cup of which the extending portion 201 of each aperture 200 has specific length (D) and width (X) corresponding to the size of coffee ground particles. Due to the consistent diameter characteristics, good forming quality of the apertures 200 during the brewing process ensures the brewing parameters of the selected specification. After brewing is completed, the substantially cylindrical apertures 200 won't become clogged with the fine coffee ground particles and are easy to clean. Whether it is an initial brew or a follow-up brew, the product of this disclosure can stably present the expected brewing parameters, and the possibility of over-extracting the coffee that contains too much caffeine can be greatly reduced, thereby avoiding the bitterness in the later stage of extraction.

To summarize, since the apertures 200 of the coffee powder filter cup according to the disclosure are formed by the processing laser (L), limitations of the apertures, such as the diameter, density, number of the apertures and the thickness of the bottom plate, in the conventional coffee powder filter cup formed by the punch die can be reduced.. Additionally, each aperture 200 has a good finishing quality and is elongated, which can lower the risk of fine powder clogging during brewing and make it simpler to clean, ensuring that the selected specifications can truly provide the anticipated flow resistance. As a result, the risk of accidental over-extraction can be greatly decreased, and coffee's brewing quality and flavor can be effectively improved. In light of this, the object of the present disclosure can be successfully accomplished.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

While the disclosure has been described in connection with what is(are) considered the exemplary embodiment(s), it is understood that this disclosure is not limited to the disclosed embodiment(s) but is intended to cover various arrangements included within the spirit and scope of the broadest interpretation so as to encompass all such modifications and equivalent arrangements.

## Claims

1. A coffee powder filter cup for a coffee machine comprising a bottom wall (2) and a peripheral wall (3) that extends from a periphery of said bottom wall (2) in an upward direction to cooperate with said bottom wall (2) to define a brewing space (W);
**characterized in that** said bottom wall (2) has a thickness that ranges from 0.7 mm to 1.5 mm and a plurality of apertures (200) that are formed by a processing laser (L), each of said apertures (200) having an extending portion (201) that has a length (D) ranging from 0.2 mm to 2.0 mm in an extending direction (E), and two end portions (202) that are connected respectively to opposite ends of said extending portion (201) in the extending direction (E), said extending portion (201) having a width (X) that ranges from 0.05 mm to 0.4 mm in a direction that is perpendicular to the extending direction (E).

2. The coffee powder filter cup as claimed in Claim 1, wherein said bottom wall (2) is round-shaped, and has a plurality of filtration areas (Z) concentrically and radially spaced apart from each other and a plurality of buffer areas (B) arranged alternately with said filtration areas (Z), each of said filtration areas (Z) being formed with corresponding ones of said apertures (200).

3. The coffee powder filter cup as claimed in Claim 2, wherein said bottom wall (2) further has a central region (C) having a round shape, disposed at a center thereof, and formed with corresponding ones of said apertures (200).

4. The coffee powder filter cup as claimed in claim 1, wherein said bottom wall (2) is round-shaped, said extending portion (201) of each of said apertures (200) extending in the extending direction (E) that extends radially and outwardly from a center point (P) of said bottom wall (2), said apertures (200) being arranged radially with respect to said center point (P) of said bottom wall (2).

5. The coffee powder filter cup as claimed in claim 1, wherein:
said bottom wall (2) is round-shaped, said apertures (200) are divided into a plurality of groups;
for each of the groups, said apertures (200) in the group are arranged in an circular region surrounding a center point (P) of said bottom wall (2);
the groups are concentrically and radially spaced apart from each other;
an angle (A) is defined between the extending direction (E) in which said extending portion (201) of each of said apertures (200) extends and an imaginary line between said center point (P) of said bottom wall (2) and a center of said aperture (200);
for each of said groups of said apertures (200), the angles (A) corresponding to said apertures (200) in the group are identical; and
the angles (A) of said groups of said apertures (200) increase radially and outwardly.

6. The coffee powder filter cup as claimed in any one of Claims 1 to 5, further comprising an annular positioning ring (4) extending radially and outwardly from a top end of said peripheral wall (3).

7. A process for manufacturing a coffee powder filter cup for a coffee machine, **characterized by**:
a forming step (61) of forming a semi-finished product (60) from a metal raw material by lathe machining, the semi-finished product (60) having a non-porous bottom wall (2') and a peripheral wall (3) that extends from a periphery of the non-porous bottom wall (2') in an upward direction to cooperate with the non-porous bottom wall (2') to define a brewing space (W), the non-porous bottom wall (2') having a thickness that ranges from 0.7 mm to 1.5 mm; and
a laser processing step (62) of forming a plurality of apertures (200) through the non-porous bottom wall (2') by a processing laser (L), each of the apertures (200) being formed by using the processing laser (L) to penetrate the non-porous bottom wall (2') and moving the processing laser (L) in an extending direction (E) for a predetermined distance, each of the aperture (200) having an extending portion (201) that has a length (D) ranging from 0.2 mm to 2.0 mm in the extending direction (E), and two end portions (202) that are connected respectively to opposite ends of the extending portion (201) in the extending direction (E), the extending portion (201) having a width (X) that ranges from 0.05 to 0.4 mm in a direction that is perpendicular to the extending direction (E).

8. The process for manufacturing a coffee powder filter cup as claimed in Claim 7, wherein the semi-finished product (60) further has an annular positioning ring (4) extending radially and outwardly from a top end of said peripheral wall (3).

9. The process for manufacturing a coffee powder filter cup as claimed in any one of Claims 7 and 8, wherein the processing laser (L) used in said laser processing step (62) is a fiber laser.

10. The process for manufacturing a coffee powder filter cup as claimed in any one of Claims 7 to 9, further comprising a post-processing step (63) after said laser processing step (62), said post-processing step (63) including a polishing substep (631) of polishing the semi-finished product (60), and a deburring substep (632) of removing burrs of the semi-finished product (60).
